# EUROPÄISCHE PATENTSCHRIFT

(11) **EP 1 955 431 B1**
(45) Veröffentlichungstag und Bekanntmachung des Hinweises auf die Patenterteilung: **20.01.2010**
(21) Anmeldenummer: 06818809.3
(22) Anmeldetag: 24.11.2006
(51) Int. Cl.: H02K 41/02, H02K 55/00, H02K 1/14, H02K 1/16, H02K 3/12

(54) **PRIMÄRTEIL EINES LINEARMOTORS UND LINEARMOTOR HIERMIT**
PRIMARY PART OF A LINEAR MOTOR, AND A LINEAR MOTOR THEREWITH
PARTIE PRIMAIRE D UN MOTEUR LINÉAIRE ET MOTEUR LINÉAIRE ÉQUIPÉ DE CELLE-CI

(30) Priorität: 30.11.2005 DE 102005057381
(43) Veröffentlichungstag der Anmeldung: 13.08.2008
(73) Patentinhaber: Zenergy Power GmbH, 53359 Rheinbach (DE)
(72) Erfinder: WITTE, Werner, 59425 Unna (DE); BÜHRER, Carsten, 53125 Bonn (DE)
(74) Vertreter: Althaus, Arndt
(86) Internationale Anmeldenummer: PCT/EP2006/011293
(87) Internationale Veröffentlichungsnummer: WO 2007/062782

(56) Entgegenhaltungen:
- WO-A2-01/48888
- DE-A1- 10 317 993
- DE-A1-102004 025 660
- US-A- 3 911 706
- US-A- 4 692 673
- US-A1- 2004 263 003
- US-B1- 6 329 728

## Beschreibung

Die Erfindung betrifft ein Primärteil eines Linearmotors für ein relativ zum Primärteil linearbewegbares Sekundärteil, mit mehreren Spulen zum Erzeugen eines zwischen Primärteil und Sekundärteil entlang einer Achse kraftvermittelnden Magnetfeldes und mit zwischen benachbarten Spulen angeordneten Zähnen aus magnetisierbarem Material, die einen der Achse abgewandten Basisabschnitt und einen der Achse zugewandten Stirnabschnitt aufweisen, wobei die Zähne am Stirnabschnitt breiter als am Basisabschnitt sind. Die Erfindung betrifft ferner auch einen Linearmotor mit einem derartigen Primärteil.

Ein Linearmotor mit einem Primärteil und einem relativ zu diesem verschiebbaren Sekundärteil ist aus der DE 42 17 357 A1 bekannt. Das Primärteil weist Spulen auf, die zur Erzeugung des sich entlang einer Bewegungsachse des Sekundärteils erstreckenden Magnetfeldes mit einem mehrphasigen Wechselstrom beaufschlagt werden. Das Primärteil bildet dabei einen Stator und das Sekundärteil einen bewegbaren Läufer. Zwischen den Spulen sind weichmagnetische Zähne angeordnet, welche Feldlinien des Magnetfeldes bündeln und das von den Spulen erzeugte Magnetfeld verstärken.

Bei Elektromotoren mit einem ein Magnetfeld erzeugenden Primärteil ist bekannt, daß die Magnetisierbarkeit des verwendeten Statormaterials durch die Materialeigenschaften, d.h. die Sättigungsmagnetisierung, beschränkt ist. Bei Verwendung hoher Stromdichten in den Windungen des Primärteils kommt es zur Sättigung, d.h. eine größere Durchflutung kann nicht erreicht werden. Die magnetische Flußdichte ist im Allgemeinen definiert als der Fluß des verstärkten Magnetfeldes durch eine Fläche.

Aus der gattungsgemäßen US 3,911,706 ist ein Linearmotor mit einem Stator bekannt, der aus abwechselnd aufeinandergeschichteten, weichmagnetischen Statorhülsen und Statorringscheiben besteht. Zwischen den Statorringscheiben sind Spulen angeordnet. Die Statorhülsen, die Statorringscheiben und die Spulen sind konzentrisch zu einer Aufnahme für einen Rotor angeordnet. Bei einer in der US 3,911,706 gezeigten Ausführungsform sind am Innenumfang der Statorringscheiben, unmittelbar angrenzend an die Aufnahme, im Querschnitt T-förmige Zahnkopfstücke aus einem Material höherer Magnetisierbarkeit angeordnet. Zwischen den seitlich über die Statorringscheiben hinausragenden Abschnitten der T-förmigen Zahnkopfstücke sind jeweils Isolations- bzw. Versteifungsringe angeordnet und die Spulen erstrecken sich in Radialrichtung bis zu den seitlich über die Statorringscheiben vorkragenden Zahnkopfstücken bzw. den Isolationsringen.

Aus der DE 2 336 893 ist ein aus einem Eisenkern mit Eisenlamellen als Zähnen bestehendes Primärteil bekannt. Die Zähne sind mittels Nutenschlitzen voneinander getrennt, die im Abstand von den Zahnköpfen breiter sind als im Bereich der Zahnköpfe. In den breiteren, von der Aufnahme entfernter liegenden Nutabschnitten sind Wicklungen bzw. Spulen aufgenommen, während die näher zur Aufnahme angeordneten schmaleren Schlitze mittels Füllelementen zur Verstärkung des Primärteils ausgefüllt sind. Sämtliche nach Einfügen der Füllelemente verbleibenden Bereiche sind mit einer gießfähigen Füllmasse ausgegossen, die von den Füllelementen getragen wird.

WO 01/48888 offenbart einen Eisenkern für einen Linearmotor.

Die zurzeit am Markt erhältlichen Linearmotoren können als Stell- und Positionierglieder zum Einsatz kommen und erreichen hierbei O-berflächenkraftdichten von bis zu 8N/cm².

Aufgabe der Erfindung ist es, ein Primärteil eines Linearmotors bzw. einen Linearmotor zu schaffen, die bei kompakter Bauweise große Kraftdichten ermöglichen, so daß die Linearmotoren gegebenenfalls auch hydraulische Antriebe ersetzen können.

Diese Aufgabe wird erfindungsgemäß dadurch gelöst, daß sich die Spulen nicht nur zwischen den Basisabschnitten sondern zum Vergrößern der magnetischen Flußdichte auch im Zwischenraum zwischen den breiteren Stirnabschnitten benachbarter Zähne erstrecken.

Durch die relativ zum Basisabschnitt breiteren Stirnabschnitte wird die Menge an magnetisierbarem bzw. weichmagnetischem Material im Stirnabschnitt der Zähne und damit in dem dem Sekundärteil zugewandten Bereich vergrößert, so daß höhere Stromdichten in den Spulen zu einer höheren Magnetisierung und damit zu einem höheren magnetischen Fluß im Stirnabschnitt der Zähne führen. Die lokale Verbreiterung der Stirnabschnitte bewirkt, daß dort die Magnetisierung in den Zähnen erst bei sehr hohen Stromdichten eine Sättigung erreicht. Durch die Veränderung der Zahnform kann vermieden werden, daß der höchste magnetische Fluß bereits auf z.B. halber Zahnhöhe auftritt und dann zum Sekundärteil hin abfällt. Die Verstärkung des Magnetfeldes wird insbesondere in der Nähe der Achse bzw. in der Nähe des Sekundärteils erreicht. Durch die mit supraleitenden Spulen erzielbaren, hohen Stromdichten sind große Kraftdichten entlang des Sekundärteils erzeugbar. Die an den Aufnahmebereich angrenzenden, breiteren Stirnabschnitte stellen mehr magnetisierbares Material als im Basisabschnitt bereit, um den magnetischen Fluß zum Aufnahmebereich hinzulenken. Das Magnetfeld, das von Spulenwindungen erzeugt wird, die in Höhe der Basisabschnitte angeordneten sind, magnetisiert die Zähne sowohl im Basisabschnitt als auch im Stirnabschnitt. Das Magnetfeld dieser Windungen zusammen mit der Magnetisierung der Zähne bildet einen Teil des Magnetfelds im Aufnahmebereich. Die vorzugsweise bis fast an den Aufnahmebereich heranreichenden, im Zwischenraum zwischen den verbreiterten Stirnabschnitten der Zähne angeordneten Spulenwindungen dienen zur zusätzlichen Verstärkung des Magnetfeldes im Aufnahmebereich und erhöhen zusätzlich die Magnetisierung in den Stirnabschnitten. Dadurch, daß sich die Spulen neben den Stirnabschnitten bis nahezu an den Aufnahmebereich heran erstrecken, sind eine gezielte Beeinflussung bzw. Steuerung des magnetischen Flusses im Bereich der breiteren, aufnahmenahen Stirnabschnitte und folglich hohe Kräfte entlang eines im Aufnahmebereich angeordneten Sekundärteils erzeugbar.

Gemäß einer vorteilhaften Ausgestaltung kann die Breite der Zähne im Basisabschnitt konstant oder im Wesentlichen konstant sein. Der Stirnabschnitt kann in Radialrichtung ungefähr oder genau die halbe Zahnhöhe einnehmen. Bei einer fertigungstechnisch einfachen Ausgestaltung sind die Zahnseiten im Stirnabschnitt und/oder im Basisabschnitt plan. Die einander gegenüberliegenden Zahnseiten benachbarter Zähne können sich dann abschnittsweise parallel zueinander erstrecken. Der Basisabschnitt der Zähne kann vorzugsweise mit mindestens einer Stufe an einer der beiden den Spulen zugewandten Zahnseiten in den Stirnabschnitt übergehen. Die andere Zahnseite der Zähne kann eben, ohne Stufe oder dgl. ausgeführt sein.

Gemäß einer besonders vorteilhaften Ausgestaltung sind die Zähne mehrteilig aufgebaut. Mehrteilige Zähne können fertigungstechnisch besonders einfach mit der Verbreiterung versehen werden. Die Zähne können insbesondere zweiteilig aufgebaut sein. In einer bevorzugten Ausgestaltung bildet dann ein Zahnteil den Basisabschnitt sowie einen Teilabschnitt des Stirnabschnitts, wobei die Verbreiterung im Stirnabschnitt mittels eines seitlich am Zahnteil angeordneten Ringes erzielt wird. Der Zahnteil erstreckt sich dann zweckmäßig über die ganze Zahnhöhe. Der Zahnteil und der Ring können jeweils eine konstante Dicke aufweisen. Alternativ kann sich der Ring zum Ringumfang hin verjüngen oder am Ringumfang abgeschrägt sein. Der Ring aus magnetisierbarem Material könnte auch mit einer konusförmigen Abschrägung im Stirnabschnitt versehen sein. Bei einer anderen zweiteiligen Ausgestaltung der Zähne kann der Stirnabschnitt von einem breiten Zahnteil gebildet sein, während der Basisabschnitt dann von einem am Außenumfang des breiteren Zahnteils angeordneten, schmaleren Zahnteil gebildet werden kann. Alle Zahnteile können zur Verminderung von Wirbelstromverlusten insbesondere in Eisen aus isolierten, gestapelten Blechen oder aus pulvermetallurgisch hergestelltem Material mit oder ohne Binder hergestellt sein.

Das Primärteil weist vorzugsweise eine entlang der Achse durch die Spulen und die Zähne gebildete Aufnahme für das Sekundärteil auf. Das Primärteil kann die Achse teilweise umgreifen. Vorzugsweise umgreift das Primärteil die Achse jedoch vollständig und bildet so eine radial geschlossene, insbesondere konzentrische um die Achse für das Sekundärteil angeordnete Aufnahme. Die Zähne können insbesondere ringförmig ausgebildet sein oder aus Ringsegmenten oder geschlitzten Ringen bestehen. Die Zähne sind zur Verringerung von Wirbelstromverlusten vorzugsweise mit Schlitzen versehen.

Auch die Spulen sind vorzugsweise ringförmig ausgebildet. Die Spulen sind bei einer besonders bevorzugten Ausführung koaxial zu der Achse angeordnet und/oder parallel zueinander ausgerichtet. Zweckmäßig sind sie als "Pancake-Spulen" gefertigt. Diese gegebenenfalls auch als Doppelscheibenspulen ausgeführten "Pancake-Spulen" sind weiter vorzugsweise in eine Vergußmasse, z.B. Kunststoff, eingegossen, um die Wicklung zu fixieren und die Spulen besser handhaben zu können. Zwischen benachbarten Zähnen sind vorzugsweise zwei oder mehr Spulen bzw. Spulenpakete angeordnet. Dadurch können die Spulen an den Zähnen anliegen und insbesondere Zwischenräume zwischen benachbarten Zähnen im wesentlichen ausfüllen, um sich in axialer Richtung an den Zähnen abstützen zu können. Die Zähne erstrecken sich in Radialrichtung zweckmäßig von einem Spulenumfang über eine innere Windung der Spulen hinaus, wodurch die Zähne sich weiter zur Achse erstrecken als die Spulen. Die Aufnahme kann so durch die Stirnseiten der Zähne begrenzt sein. Eine erste Spule liegt vorzugsweise am Basisabschnitt des Zahns an und eine zweite Spule liegt weiter vorzugsweise an der ersten Spule und am Stirnabschnitt an. Zweckmäßig liegt die zweite Spule an der Zahnseite des benachbarten Zahns plan an.

Die Spulen erstrecken sich sowohl zwischen den Basisabschnitten als auch zwischen den Stirnabschnitten benachbarter Zähne. Die Spulen sind vorzugsweise derart zwischen benachbarten Zähnen angeordnet, daß sie an den Stirnabschnitten und den Basisabschnitten anliegen bzw. diesen benachbart gegenüberliegen. Die Spulen oder Spulenpakete erstrecken sich in Radialrichtung jeweils vorzugsweise vollständig entlang der Basisabschnitte und zumindest entlang eines Teils bzw. Teilabschnitts der Stirnabschnitte. Die Spulen füllen vorzugsweise die Zwischenräume zwischen den Basisabschnitten vollständig und zwischen den Stirnabschnitten fast vollständig aus. Insbesondere vorteilhaft ist, wenn die Spulen an die Spaltgeometrie zwischen den Zähnen angepaßt sind. In die Spalte können dabei entweder einteilige, entsprechend angepaßte Spulen oder Spulenpakete eingesetzt sein oder die Spalte bzw. Zwischenräume zwischen den Stirn- und Basisabschnitten der Zähne werden mit mehreren, vorzugsweise ringförmigen Spulen ausgefüllt. Die Spulen oder Spulenpakete können sich in Axialrichtung unmittelbar oder mittelbar an den Zähnen abstützen. Zum mittelbaren Anliegen bzw. Abstützen können die Spulen von den Zähnen mittels Abstandhalter beabstandet angeordnet sein, um Kühlspalte für ein Kühlmittel zwischen den Zähnen und den Spulen auszubilden. Die Abstandhalter können hierbei vorzugsweise an den Spulen befestigt sein.

Eine alternative Anordnung der Spulen kann mit einer breiten Spule und einer schmalen Spule erreicht werden. Die breite Spule liegt zweckmäßig am Basisabschnitt benachbarter Zähne an und die schmale Spule liegt zweckmäßig am Stirnabschnitt beider Zähne an. Die Zähne und die Spulen können, unabhängig von der Anordnung der Spulen, von einem Joch als magnetischer Rückschluß umgeben sein, das den Spalt zwischen den Spulen begrenzt. Die Zähne können entweder durch Nuten am Joch einstückig ausgebildet sein oder durch Ringe oder Ringscheiben am Joch gebildet sein. Die Zähne und/oder das Joch weisen zweckmäßig ein weichmagnetisches Material auf, das vorzugsweise eine Co-Fe-Legierung oder Fe-Si-Legierung enthält und/oder geblecht und/oder als Pulververbundmaterial und/oder als Pulversintermaterial ausgeführt sein kann. Jede der Spulen kann mindestens eine aus einem Leiter gewickelte Wicklung aufweisen, die mit einer Stromdichte von vorzugsweise mehr als 10A/mm² betreibbar ist. Dazu kann der Leiter, aus dem die Wicklung gefertigt ist, aus Aluminium oder Kupfer gefertigt sein, wobei die Spulen dann vorzugsweise wassergekühlt sind. Alternativ kann der Leiter aus einem Supraleiter, vorzugsweise einem Hochtemperatursupraleiter, gefertigt sein, um hohe Stromdichten im Leiter zu erreichen. Durch die erfindungsgemäße Zahnform und die insbesondere bei Supraleitern erzielbaren hohen Stromdichten kann das Primärteil auch für den Einsatz des Linearmotors als Stell- oder Hubantrieb z.B. in Pressanlagen geeignet sein.

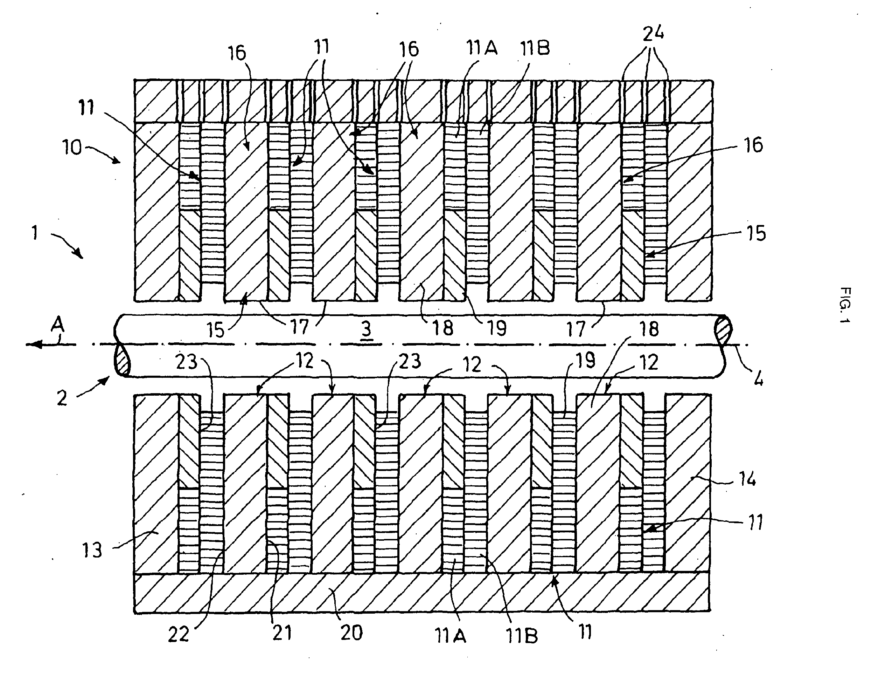

Weitere Vorteile und Ausgestaltungen der Erfindung ergeben sich aus der nachfolgenden Beschreibung eines in der Zeichnung gezeigten Ausführungsbeispiels eines erfindungsgemäßen Linearmotors bzw. eines erfindungsgemäßen Primärteils. In der Zeichnung zeigt die einzige Figur schematisch einen Längsschnitt durch einen Linearmotor mit einem Primärteil und einem Sekundärteil.

Die Figur zeigt stark schematisch vereinfacht einen Linearmotor 1 mit einem hier zylindrisch ausgeführten Primärteil 10 und einem zylindrischen Sekundärteil 2. Das Primärteil 10 ist entlang einer zentrischen Achse 4 mit einer Aufnahme 3 versehen. Das Sekundärteil 2 erstreckt sich in der Aufnahme 3 entlang der Achse 4. Das mit Spulenpaketen 11 versehene Primärteil 10 und das Sekundärteil 2 sind konzentrisch zu der Achse 4 angeordnet. Das Sekundärteil 2 ist entlang der Achse 4 durch ein nicht dargestelltes, von den Spulenpaketen 11 erzeugtes Magnetfeld bewegbar. Bei dem dargestellten Linearmotor 1 dient das Primärteil 10 hier als ortsfester Stator, der das Sekundärteil 2 als Läufer linear bzw. in Ausschubrichtung A bewegt. Anwendungsgebiete der erfindungsgemäßen Linearmotoren sind beispielsweise kompakt gebaute Hubantriebe an Pressanlagen oder Einschubantriebe von Spritzgußmaschinen oder dgl., deren Antriebe im Stand der Technik bisher aus Hydrauliksystemen bestehen.

Das Primärteil 10 weist in der gezeigten Ausgestaltung sechs Spulenpakete 11 auf, die die Achse 4 und damit das Sekundärteil 2 umringen. Die Spulenpakete 11 sind konzentrisch zur Achse 4 angeordnet. Jedes Spulenpaket 11 umfaßt eine erste Spule 11A und eine zweite Spule 11B, wobei beide Spulen 11A, 11B denselben Außendurchmesser aufweisen, der Innendurchmesser der Spule 11A hingegen deutlich größer ist als der der Spule 11b. In Radialrichtung ist die Spule 11A schmal, die Spule 11B hingegen deutlich tiefer. Die schmalere Spule 11A liegt seitlich an der tieferen Spule 11B an. Die ringförmigen, nur schematisch angedeuteten Spulen 11A, 11B können zweckmäßig als "Pancake-" oder Doppelscheibenspulen ausgeführt sein. Zum Erzeugen möglichst großer Magnetfelder sind die Spulen 11A, 11B vorzugsweise aus einem gut leitfähigen Leiter dicht gewickelt. Als Leiter kann Aluminium, Kupfer, ein Supraleiter oder vorzugsweise ein Hochtemperatursupraleiter eingesetzt werden, mit dem Stromdichten von z.B. mehr als 10A/mm² erreichbar sind. Durch diese hohen Stromdichten lassen sich in der Aufnahme 3 starke Magnetfelder mit den Spulenpaketen 11 erzeugen, die durch magnetisierbare innere Zähne 12 sowie äußeren Zähne 13, 14 verstärkt werden. Jeweils zwischen zwei benachbarten Zähnen 12-13, 12-14 oder 12-12 ist ein Spulenpaket 11 angeordnet, so daß sich in Axialrichtung Zähne 12, 13, 14 und Spulenpakte 11 abwechseln. Während an den Zähnen 12 beidseitig Spulenpakete 11 anliegen, liegt an den beiden äußeren Zähnen 13, 14 jeweils nur ein Spulenpaket 11 an. Die Zähne 12, 13, 14 erstrecken sich jeweils vom Spulenumfang der Spulen 11A, 11B bis über eine innere Windung der tieferen Spule 11B hinaus zur Achse 4 hin. Die Zähne 12, 13, 14 weisen je einen der Achse 4 zugewandten Stirnabschnitt 15 und einen der Achse 4 abgewandten Basisabschnitt 16 auf. Mit einer Stirnseite 17 des Stirnabschnitts 15 wird dabei die Aufnahme 3 begrenzt. Die Zähne 12, 13, 14 liegen mit dem Außenmantel des Basisabschnitts an einem mantelförmigen Joch 20 an, das als magnetischer Rückschluß dient.

Erfindungsgemäß sind die Zähne 12, 13 zum Vergrößern der magnetischen Flußdichte am Stirnabschnitt 15 breiter als am Basisabschnitt 16. Die Zähne 12, 13 sind hier zweiteilig ausgeführt und werden durch einen sich über den Stirnabschnitt 15 und den Basisabschnitt 16 erstreckenden Zahnring 18 und einen Verbreiterungsring 19 gebildet, der einseitig am Zahnring 18 anliegt. Umgekehrt zu den Spulen 11A, 11B erstreckt sich der Verbreiterungsring 19 nur von der Stirnseite 17 in Radialrichtung bis zur halben Zahnhöhe, um jeweils den Zahn 12 bzw. 13 im Stirnabschnitt 15 gegenüber dem Basisabschnitt 16 zu verbreitern, wodurch sich mehr magnetisierbares Material zwischen den Spulen 11B im Stirnabschnitt 15 der Zähne 12, 13 befindet als zwischen den Spulenpaketen 11 im Basisabschnitt 16. Die Zähne 12, 13 verstärken dadurch im Stirnabschnitt 15 das von den Spulen 11A, 11B erzeugte Magnetfeld durch Magnetisierung am stärksten, ohne daß es bereits auf halber Zahnhöhe zur Sättigung der Magnetisierung in den Zähnen 12, 13 kommt.

Die Spulenpakete 11 erstrecken sich sowohl zwischen den Basisabschnitten 16 als auch zwischen den Stirnabschnitten 15 benachbarter Zähne 12. Die Spulen 11B der Spulenpakete 11 erstrecken sich in Radialrichtung neben und entlang der Basisabschnitte 16 der Zähne und entlang eines großen Teilabschnitts des Stirnabschnitts 15 bis fast an die Aufnahme 3 heran. Das von den beiden Spulen 11A, 11B gebildete Spulenpaket 11 ist in Höhe der Basisabschnitte 16 breiter als in Höhe der Stirnabschnitte 15. Die Spulen 11 füllen die Zwischenräume zwischen den Basisabschnitten 16 und den Stirnabschnitten 15 benachbarter Zähnen 12 fast vollständig aus und sind an die Spaltgeometrie zwischen den Basis- und Stirnabschnitten 15, 16 angepasst. Die Spaltgeometrie entspricht im Wesentlichen dem Spulenquerschnitt bzw. umgekehrt. Die Spulen 11B sind zwischen benachbarten Zähnen 12 derart angeordnet, daß sie sich in Radialrichtung bis annähernd an die Aufnahme 3 für den Sekundärteil 4 heran erstrecken, während die Spulen 11A jeweils den Zwischenraum in Höhe der Basisabschnitte 16 zwischen der Innenumfangsfläche des Jochs 20 und der aufnahmefernen Rückseite des die Zähne 12 verbreiternden Stirnabschnitts 15 ausfüllen. Im Bereich der Basisabschnitte 16 liegen die Spulen 11B jeweils axial neben einer Spule 11A. Die Spule 11B füllt den Zwischenraum in Höhe des Basisabschnitts 16 zwischen der Spule 11A auf der einen Seite und der planen Zahnfläche des Basisabschnitts 16 des benachbarten Zahns 12 auf der gegenüberliegenden Seite vollständig aus und erstreckt sich weiter in den Zwischenraum zwischen dem Verbreiterungsring 19 und der gegenüberliegenden, planen Zahnfläche des benachbarten Zahns 12 hinein. Die Spulen 11B überdecken dabei in Radialrichtung mehr als die Hälfte einer Seitenfläche des Stirnabschnitts 15 bzw. fast die vollständige Seitenfläche des Stirnabschnitts 15 bzw. des Verbreiterungsrings 19. Die Spule 11A weist im Wesentlichen dieselbe Breite wie der Verbreiterungsring 19 auf. Die Breite der Spule 11B entspricht annähernd oder exakt der Breite des Zwischenraums zwischen den benachbarten Stirnabschnitten 15. Die Spule 11B stützt sich in Axialrichtung auf der einen Seite an der planen Zahnseite und auf der anderen Seite an der Spule 11A sowie dem Verbreiterungsring 19 ab. Die Spule 11A liegt in Radialrichtung gesehen zwischen dem Joch 20 und dem Verbreiterungsring 19. Durch den breiten Stirnabschnitt 15 kann das Spulenpaket 11 eine hohe Stromdichte aufweisen, ohne daß im weichmagnetischen Zahnmaterial auf Zwischenhöhe der stromführenden Spulen 11A, 11B, z.B. auf halber Zahnhöhe, eine magnetische Sättigung des magnetisierbaren Zahnmaterials auftritt. Der parallel zum Stirnabschnitt 15 liegende Teil der Spule 11B erzeugt einen zusätzlichen magnetischen Fluss in der Aufnahme 3 und bewirkt eine zusätzliche Magnetisierung in den Stirnabschnitten 15.

Die Spule 11A liegt im Basisabschnitt 16 seitlich an der Zahnseite 21 des Zahnrings 18 an. Am Außenumfang liegen die Spulen 11A am Joch 20 an und mit ihrem Innenumfang liegen sie am Verbreiterungsring 19 an. Die Spule 11B liegt partiell seitlich an der Spule 11A und außerdem seitlich an der Zahnseite 23 des Verbreiterungsrings 19 an.
Mit ihrer anderen Seitenfläche liegt sie an der über die gesamte Zahnhöhe flachen Zahnseite 22 des den benachbarten Zahn partiell bildenden Zahnrings 18 an. Die Spulenpakete 11 füllen die Zwischenräume zwischen den Zähnen 12, 13, 14 fast vollständig aus. Die Breite der Zähne 12, 13 ist im Basisabschnitt 16 konstant. Mit dem Verbreiterungsring 19 wird an einer der beiden den Spulen 11A, 11B zugewandten Zahnseite 21 des Zahnrings 18 eine Stufe gebildet. Der Verbreiterungsring 19 verbreitert die Zähne 12, 13 im Stirnabschnitt. Die Zähne 12, 13 sind jeweils an der dem Verbreiterungsring 19 gegenüberliegenden Zahnseite 22 über die ganze Zahnhöhe plan. Das Joch 20 als magnetischer Rückschluß und die Zähne 12, 13, 14 dienen zur Bündelung des magnetischen Flusses. Das von den Spulenpaketen 11 erzeugte Magnetfeld wird durch eine Magnetisierung der Zähne 12 verstärkt. Da die Stromdichten in den Spulenpaketen 11 sehr hoch sind, ist es erfindungsgemäß vorteilhaft, zusätzlich magnetisierbares Material im Stirnabschnitt 15 zwischen die Spulen einzubringen, wie es hier in Form des Verbreiterungsringes 19 geschehen ist, so daß die Zähne nicht bereits z.B. auf halber Zahnhöhe bis zur Sättigung magnetisiert werden. Die Zähne 12, 13 weisen die höchste Magnetisierung an der Aufnahme 3 im Stirnabschnitt 15, insbesondere an den Stirnseiten 17 der Zähne 12, 13 auf. Durch die Verbreiterung der Zähne 12, 13 sind die erzielbaren Kraftdichten in der Aufnahme 3 hoch. Zur Kühlung der Spulenpakete 11 sind vorzugsweise kleine hier nicht dargestellte Kühlspalte zwischen den Spulen 11A, 11B und den Zähnen 12, 13, 14 angeordnet, in denen ein nicht dargestelltes Kühlmittel, wie z.B. Wasser, Stickstoff, Helium oder ähnliches, die Spulen 11A, 11B kühlend zirkulieren kann. Im vertikal aufragenden Teil des Primärteils 10 sind im Joch 20 Kühlkanäle 24 angeordnet, durch die das Kühlmittel ein- und austreten kann.

Für den Fachmann sind aus der Beschreibung zahlreiche Modifikationen ersichtlich, die in den Schutzbereich der anhängenden Ansprüche fallen sollen. Der Linearmotor kann als Synchron- oder Asynchronmotor in einer geschlossenen oder offenen Bauform ausgeführt sein. Im Ausführungsbeispiel sind ein zylindrisches Primär- und Sekundärteil beschrieben. Das Primär- und Sekundärteil könnte auch flach oder nur teilzylindrisch ausgebildet sein. Das Sekundärteil könnte mit axial hintereinander angeordneten Dauermagneten oder Elektromagneten versehen sein. Alternativ könnte das Sekundärteil auch als ein magnetisierbarer oder durch induzierte Ströme magnetisierter Metallstrang in Form eines Stabes oder Rohres ausgeführt sein, der mit dem Magnetfeld des Primärteils durch einen Ziehring hindurchgeschoben und/oder hindurchgezogen wird. In einer alternativen Anordnung könnten sich die Spulen auch radial überlappen. Die Zähne oder zumindest Zahnteile könnten auch einstückig an dem Joch ausgebildet sein. Neben dem Einsatz von mehrteiligen Spulenpaketen, z.B. aus zwei oder drei Spulen, ist es auch denkbar, eine an die Spaltgeometrie angepaßte Spule zwischen den Zähnen einzusetzen.

## Patentansprüche

1. Primärteil eines Linearmotors (1) zum Bewegen eines Sekundärteils (2) relativ zum Primärteil (10), mit mehreren konzentrisch zu einer Achse (A) angeordneten Spulen (11A, 11B) zum Erzeugen eines zwischen Primärteil (10) und Sekundärteil (2) entlang der Achse (4) kraftvermittelnden Magnetfeldes und mit zwischen benachbarten Spulen (11A, 11B) angeordneten Zähnen (12) aus magnetisierbarem Material, die einen der Achse abgewandten Basisabschnitt (16) und einen der Achse (4) zugewandten Stirnabschnitt (15) aufweisen, wobei die Zähne (12) am Stirnabschnitt (15) breiter als am Basisabschnitt (16) sind, **dadurch gekennzeichnet, dass** der Basisabschnitt (16) an einer der beiden den Spulen zugewandten Zahnseiten (21) mit einer Stufe in den Stirnabschnitt (15) übergeht, wobei sich die Spulen (11B) zum Vergrößern der magnetischen Flußdichte im Zwischenraum zwischen den Basisabschnitten (16) und im Zwischenraum zwischen den Stirnabschnitten (15) benachbarter zähne (12) erstrecken.

2. Primärteil nach Anspruch 1, **dadurch gekennzeichnet, daß** die Breite der Zähne (12) im Basisabschnitt (16) konstant oder im wesentlichen konstant ist und/oder dass die andere, der Stufe abgewandt liegende Zahnseite (22) plan ist.

3. Primärteil nach Anspruch 1 oder 2, **dadurch gekennzeichnet, daß** der Stirnabschnitt (15) in Radialrichtung die halbe Zahnhöhe einnimmt.

4. Primärteil nach einem der Ansprüche 1 bis 3, **dadurch gekennzeichnet, daß** entgegengesetzte Zahnseiten (21, 22) eines Zahns (12) abschnittsweise im Stirnabschnitt (15) und/oder im Basisabschnitt (16) plan sind und sich parallel zueinander erstrecken.

5. Primärteil nach einem der Ansprüche 1 bis 4, **dadurch gekennzeichnet, daß** die Zähne (12) mehrteilig aufgebaut sind, wobei ein Zahnteil (18) den Basisabschnitt (16) sowie einen Teilabschnitt des Stirnabschnitts (15) bildet und zur Verbreiterung des Stirnabschnitts (15) ein Ringteil (19) seitlich am Zahnteil (18) angeordnet ist.

6. Primärteil nach Anspruch 5, **dadurch gekennzeichnet, daß** das Zahnteil (18) und das Ringteil (19) eine konstante Breite aufweisen oder dass der Ringteil (19) sich zum Ringumfang hin verjüngt oder konisch abgeschrägt ausgeführt ist.

7. Primärteil nach einem der Ansprüche 1 bis 6, **gekennzeichnet durch** eine entlang der Achse (4) **durch** die Spulen (11A, 11B) und/oder die Zähne (12) gebildete Aufnahme (3) für das Sekundärteil (2) und/oder die Spulen (11A, 11B) ringförmig und vorzugsweise als "Pancake-spulen" gefertigt sind.

8. Primärteil nach einem der Ansprüche 1 bis 7, **dadurch gekennzeichnet, daß** zwischen benachbarten Zähnen (12) mindestens zwei Spulen (11A, 11B) bzw. ein Spulenpaket (11) angeordnet sind.

9. Primärteil nach einem der Ansprüche 1 bis 8, **dadurch gekennzeichnet, daß** die Spulen (11A, 11B) an den Zähnen (12) anliegen und insbesondere Zwischenräume zwischen benachbarten Zähnen (12) im Wesentlichen ausfüllen.

10. Primärteil nach einem der Ansprüche 1 bis 9, **dadurch gekennzeichnet, daß** die Stirnabschnitte (15) der Zähne (12) sich in Radialrichtung zur Achse (4) über eine innere Windung der Spulen (11B) hinaus erstrecken.

11. Primärteil nach einem der Ansprüche 1 bis 10, **dadurch gekennzeichnet, daß** eine erste Spule (11A) seitlich am Basisabschnitt (16) anliegt und eine zweite Spule (11B) seitlich an der ersten Spule (11A) und seitlich am Stirnabschnitt (15) anliegt.

12. Primärteil nach einem der Ansprüche 1 bis 11, **dadurch gekennzeichnet, daß** zwischen benachbarten Zähnen (12) an die Spaltgeometrie angepaßte einzelne Spulen oder Spulenpakete (11) angeordnet sind.

13. Primärteil nach einem der Ansprüche 1 bis 12, **dadurch gekennzeichnet, daß** die Zähne (12) und/oder ein einen magnetischen Rückschluß bildendes Joch (20) ein weichmagnetisches Material aufweisen, das vorzugsweise eine CoFe-Legiexung enthält und/oder als Euwersintermaterial ausgeführt ist.

14. Primärteil nach einem der Ansprüche 1 bis 13, **dadurch** gekennzeichnen, daß die Spulen (11A, 11B) mindestens eine aus einem Leiter gewickelte Wicklung aufweisen, die mit einer Stromdichte von vorzugsweise mehr als 10A/mm² betreibbar ist, wobei der Leiter aus Aluminium oder Kupfer gefertigt ist und die Spule vorzugsweise wassergekühlt ist, oder wobei der Leiter aus einem Supraleiter, vorzugsweise einem Hochtemperatur-Supraleiter, gefertigt ist.

15. Linearmotor mit einem Sekundärteil (2) und mit einem Primärteil (10), das mit mehreren Spulen (11A, 11B) zum Erzeugen eines zwischen dem Primärteil (10) und dem Sekundärteil (2) entlang einer Achse (4) kraftvermittelnden Magnetfeldes sowie mit zwischen benachbarten Spulen (11) angeordneten Zähnen (12) versehen ist, die einen der Achse zugewandten Stirnabschnitt (15) und einen der Achse abgewandten Basisabschnitt (16) aufweisen, wobei die Zähne am Stirnabschnitt (15) breiter als am Basisabschnitt (16) sind, **dadurch gekennzeichnet, daß** sich die Spulen (11B) zum Vergrößern der magnetischen Flußdichte im Zwischenraum zwischen den Basisabschnitten (16) und im Zwischenraum zwischen den relativ zu den Basisabschnitten (16) breiteren Stirnabschnitten (15) benachbarter Zähne (12) erstrecken und der Primärteil (10) gemäß einem der Ansprüche 1 bis 14 ausgebildet ist.

## Claims

1. A primary part of a linear motor (1) for moving a secondary part (2) relative to the primary part (10), with a plurality of coils (11A, 11B) being concentrically arranged with respect to an axis (4), for inducing a magnetic field transmitting force with the coils along this axis (4) between the primary part (10) and the secondary part (2), and with teeth (12), which are made from a magnetizable material, are arranged between adjacent coils (11A, 11B) and have a base section (16) remote from the axis and an end section (15) facing the axis (4), the teeth (12) on the end section (15) being wider than on the base section (16), **characterized in that** the base sections (16) merges with a step into the end section (15) at one of the two tooth sides (21) facing the coils, wherein the coils (11B), for increasing the magnetic flux density, extend in the interspace between the base sections (16) and in the interspace between the end sections (15) of adjacent teeth (12).

2. The primary part as claimed in claim 1, **characterized in that** the width of the teeth (12) in the base section (16) is constant or substantially constant and/or that the other tooth side (22), facing remote from the step, is planar.

3. The primary part as claimed in claim 1 or 2, **characterized in that** the end section (15) takes up half the tooth height in the radial direction.

4. The primary part as claimed in one of claims 1 to 3, **characterized in that** sections of opposite tooth sides (21, 22) of a tooth (12) in the end section (15) and/or in the base section (16) are planar and extend parallel to one another.

5. The primary part as claimed in one of claims 1 to 4, **characterized in that** the teeth (12) have a multi-part design, wherein a tooth part (18) forms the base section (16) and a subsection of the end section (15) and, in order to widen the end section (15), a ring (19) is arranged laterally on the tooth part (18).

6. The primary part as claimed in claim 5, **characterized in that** the tooth part (18) and the ring part (19) have a constant width or that the ring (19) tapers towards the ring circumference or is configured so as to be conically beveled.

7. The primary part as claimed in one of claims 1 to 6, **characterized by** a receptacle (3), which is formed along the axis (4) by the coils (11A, 11B) and/or the teeth (12), for the secondary part (2) and/or that the coils (11A, 11B) are manufactured in the form of rings and preferably in the form of pancake coils.

8. The primary part as claimed in one of claims 1 to 7, **characterized in that** at least two coils (11A, 11B) or a coil stack (11) are arranged between adjacent teeth (12).

9. The primary part as claimed in one of claims 1 to 8, **characterized in that** the coils (11A, 11B) bear against the teeth (12) and in particular substantially fill interspaces between adjacent teeth (12).

10. The primary part as claimed in one of claims 1 to 9, **characterized in that** the end sections (15) of the teeth (12) extend in the radial direction with respect to the axis (4) beyond an inner turn of the coils (11B).

11. The primary part as claimed in one of claims 1 to 10, **characterized in that** a first coil (11A) bears laterally against the base section (16), and a second coil (11B) bears laterally against the first coil (11A) and laterally against the end section (15).

12. The primary part as claimed in one of claims 1 to 11, **characterized in that** individual coils or coil stacks (11) which are matched to the gap geometry are arranged between adjacent teeth (12).

13. The primary part as claimed in one of claims 1 to 12, **characterized in that** the teeth (12) and/or a yoke (20), which forms a magnetic return path, have a soft-magnetic material, which preferably contains a CoFe alloy and/or is in the form of a powder sintering material.

14. The primary part as claimed in one of claims 1 to 13, **characterized in that** the coils (11A, 11B) have at least one winding which is wound from a conductor and which can be operated with a current density of preferably more than 10 A/mm² , wherein the conductor is manufactured from aluminum or copper, and the coil is preferably water-cooled, or wherein the conductor is manufactured from a superconductor, preferably a high-temperature superconductor.

15. A linear motor with a secondary part (2) and with a primary part (10), which is provided with a plurality of coils (11A, 11B) for inducing a magnetic field transmitting force along an axis (4) between the primary part (10) and the secondary part (2) and with teeth (12), which are arranged between adjacent coils (11) and have an end section (15) facing the axis and a base section (16) remote from the axis, the teeth on the end section (15) being wider than on the base section (16), **characterized in that** the coils (11B) extend in the interspace between the base sections (16) and in the interspace between the end sections (15), which are wider than the base sections (16) of adjacent teeth (12), so as to increase the magnetic flux density, and the the primary part (10) is designed as claimed in one of claims 1 to 21.

## Revendications

1. Partie primaire d'un moteur linéaire (1) pour déplacer une partie secondaire (2) relativement à la partie primaire (1), comprenant plusieurs bobines (11A, 11B) agencées concentriques par rapport à un axe (A) pour produire le long de l'axe (A) entre partie primaire (10) et partie secondaire (2) un champ magnétique produisant une force, et comprenant, agencées entre des bobines (11A, 11B) voisines, des dents (12) en matériau magnétisable qui présentent un tronçon de base (16) éloigné de l'axe et un tronçon frontal (15) du côté de l'axe (4), les dents (12) étant plus larges sur le tronçon frontal (15) que sur le tronçon de base (16), **caractérisée en ce qu'**à l'un des deux côtés de dent (21) du côté tourné vers les bobines, le tronçon de base (16) est raccordé au tronçon frontal (15) par un gradin, les bobines (11B) s'étendant pour augmenter la densité de flux magnétique dans l'espace intermédiaire entre les tronçons de base (16) et dans l'espace intermédiaire entre les tronçons frontaux (15) de dents (12) voisines.

2. Partie primaire selon la revendication 1, **caractérisée en ce que** la largeur des dents (12) est constante ou sensiblement constante dans le tronçon de base (16) et/ou **en ce que** l'autre côté de dent (22), opposé au gradin, est plan.

3. Partie primaire selon la revendication 1 ou 2, **caractérisée en ce que** le tronçon frontal (15) occupe dans la direction radiale la moitié de la hauteur de la dent.

4. Partie primaire selon l'une des revendications 1 à 3, **caractérisée en ce que** des côtés (21, 22) opposés d'une dent (12) sont plans par tronçons dans le tronçon frontal (15) et/ou dans le tronçon de base (16) et s'étendent parallèlement l'un à l'autre.

5. Partie primaire selon l'une des revendications 1 à 4, **caractérisée en ce que** les dents (12) sont assemblées en plusieurs parties, une partie de dent (18) formant le tronçon de base (16) tout comme un tronçon partiel du tronçon frontal (15), et une partie annulaire (19) étant agencée latéralement sur la partie de dent (18) pour élargir le tronçon frontal (15).

6. Partie primaire selon la revendication 5, **caractérisée en ce que** la partie de dent (18) et la partie annulaire (19) présentent une largeur constante ou **en ce que** la partie annulaire (19) se rétrécit en allant vers la périphérie de l'anneau ou est formée en biseau conique.

7. Partie primaire selon l'une des revendications 1 à 6, **caractérisée par** un logement formé pour la partie secondaire (2) le long de l'axe (4) à travers les bobines (11A, 11B) et/ou les dents (12), ou bien les bobines (11A, 11B) sont fabriquées en forme d'anneau ou de préférence en tant que « bobines-pancake ».

8. Partie primaire selon l'une des revendications 1 à 7, **caractérisée en ce qu'**au moins deux bobines (11A, 11B) ou un paquet de bobines (11) sont agencées entre dents (12) voisines.

9. Partie primaire selon l'une des revendications 1 à 8, **caractérisée en ce que** les bobines (11A, 11B) sont ajustées sur les dents (12) et en particulier remplissent sensiblement des espaces intermédiaires entre dents (12) voisines.

10. Partie primaire selon l'une des revendications 1 à 9, **caractérisée en ce que** les tronçons frontaux (15) des dents (12) s'étendent en direction radiale vers l'axe (4) au-delà d'une spire interne des bobines (11B).

11. Partie primaire selon l'une des revendications 1 à 10, **caractérisée en ce qu'**une première bobine (11A) est latéralement adjacente au tronçon de base (16) et une deuxième bobine (11B) est latéralement adjacente à la première bobine (11A) et latéralement au tronçon frontal (15).

12. Partie primaire selon l'une des revendications 1 à 11, **caractérisée en ce qu'**entre dents (12) voisines sont agencés des bobines individuelles ou des paquets de bobines (11) adaptés à la géométrie de fente.

13. Partie primaire selon l'une des revendications 1 à 12, **caractérisée en ce que** les dents (12) et/ou une culasse (20) formant un court-circuit magnétique présentent un matériau magnétique doux qui de préférence contient un alliage CoFe et/ou est réalisé en tant que matériau fritté.

14. Partie primaire selon l'une des revendications 1 à 13, **caractérisée en ce que** les bobines (11A, 11B) présentent, bobiné à partir d'un conducteur, au moins un bobinage qui peut être utilisé avec une densité de courant de préférence supérieure à 10 A/mm², le conducteur étant réalisé en aluminium ou en cuivre et la bobine étant de préférence refroidie par eau, ou le conducteur étant réalisé en un supraconducteur, de préférence un supraconducteur à haute température.

15. Moteur linéaire comprenant une partie secondaire (2) et une partie primaire (10) qui comporte plusieurs bobines (11A, 11B) pour produire le long de l'axe (A) entre la partie primaire (10) et la partie secondaire (2) un champ magnétique produisant une force, et, agencées entre des bobines (11) voisines, des dents (12) qui présentent un tronçon de base (16) éloigné de l'axe et un tronçon frontal (15) du côté de l'axe (4), les dents étant plus larges sur le tronçon frontal (15) que sur le tronçon de base (16), **caractérisé en ce que** pour augmenter la densité de flux magnétique, les bobines (11B) s'étendent dans l'espace intermédiaire entre les tronçons de base (16) et dans l'espace intermédiaire entre les tronçons frontaux (15), plus larges que les tronçons de base (16), de dents (12) voisines, et la partie primaire (10) est formée selon l'une des revendications 1 à 14.
